# EUROPÄISCHE PATENTSCHRIFT

(11) **EP 1 957 550 B1**
(45) Veröffentlichungstag und Bekanntmachung des Hinweises auf die Patenterteilung: **20.01.2010**
(21) Anmeldenummer: 06819748.2
(22) Anmeldetag: 24.11.2006
(51) Int. Cl.: C08F 220/18, C08F 8/14, C08F 220/62

(54) **VERFAHREN ZUR UM- ODER VERESTERUNG VON SEITENKETTEN IN POLYMEREN**
METHOD FOR THE REESTERIFICATION OR ESTERIFICATION OF SIDE CHAINS IN POLYMERS
PROCEDE D'ESTERIFICATION OU DE TRANSESTERIFICATION DE CHAINES LATERALES DE POLYMERES

(30) Priorität: 29.11.2005 DE 102005056767
(43) Veröffentlichungstag der Anmeldung: 20.08.2008
(73) Patentinhaber: BASF SE, 67056 Ludwigshafen (DE)
(72) Erfinder: HÄRING, Dietmar, 68535 Neu-Edingen (DE); HERRERA TABOADA, Lidcay, B-8400 Oostende (BE); HAUER, Bernhard, 67136 Fussgönheim (DE); FRIEDRICH, Thomas, 64283 Darmstadt (DE); GÖTHLICH, Alexander, 68163 Mannheim (DE)
(86) Internationale Anmeldenummer: PCT/EP2006/068882
(87) Internationale Veröffentlichungsnummer: WO 2007/063037

(56) Entgegenhaltungen:
- WO-A-2004/042069
- US-A1- 2004 082 023

## Beschreibung

Die vorliegende Erfindung betrifft ein Verfahren zur Um- oder Veresterung von Seitenketten in Polymeren, die Polymere als solche herstellbar nach diesem Verfahren sowie die Verwendung solcher Polymere.

Polymere, die ganz oder teilweise aus Acrylaten und/oder Methacrylaten hergestellt werden, bezeichnet man als Poly(meth)acrylate, wobei die Polymerisation gegebenenfalls in Gegenwart von ein oder mehreren weiteren Monomeren, die mit (Meth)acrylaten polymerisierbar sind, durchgeführt werden kann. Zahlreiche Anwendungsgebiete von Poly(meth)acrylaten sind bekannt, beispielsweise eignen sie sich als Faserschutzmittel in Waschmitteln, als Korrosionsschutzmittel oder als Komplexbildner. Für welchen Verwendungszweck Poly(meth)acrylate am besten geeignet sind, hängt davon ab, ob und gegebenenfalls mit welchen weiteren Monomeren sie copolymerisiert werden oder ob das erhaltene Polymer weiter modifiziert wird. Demzufolge sind Verfahren, mit denen Poly(meth)acrylate modifiziert werden können von großem Interesse.

Zum einen besteht die Möglichkeit, funktionale Gruppen bereits auf Monomerbasis einzuführen und die so modifizierten Monomere anschließend zum gewünschten Poly(meth)acrylat (Derivat) zu polymerisieren. So betrifft EP-A 0 999 229 ein Verfahren zur Herstellung von Acrylsäureestern und/oder Methacrylsäureestern von Polyoxyalkylenen. In diesem Verfahren werden die jeweiligen Monomere (Acryl- und/oder Methacrylsäure oder deren Ester) in Gegenwart eines katalysierenden Enzyms mit Polyoxyalkylenen ver- oder umgeestert. Als Enzyme werden Hydrolasen, insbesondere Esterasen, Lipasen und Proteasen sowie als konkretes Ausführungsbeispiel das Handeslprodukt Novozym 435® aufgeführt. Die Polymerisation dieser Monomere wird in EP-A 0 999 229 jedoch nicht beschrieben. Sofern jedoch dieser Reaktionsweg beschritten werden soll, ist dabei problematisch, dass einerseits je nach Modifikationsart die entsprechenden Monomere instabil sind und sich oft nicht ohne Zersetzung polymerisieren lassen. Andererseits kann eine Monomerenmodifizierung auch bewirken, dass das entsprechende Monomer nur noch mit einer geringeren Anzahl weiterer Monomere copolymerisierbar ist. Aus diesen Gründen wird eine Modifizierung bereits auf Monomerenebene vermieden.

EP-A 0 386 507 betrifft hingegen ein Verfahren, bei dem Polyacrylsäureester mit langkettigen Kohlenwasserstoffi- und Polyoxyalkylengruppen hergestellt werden, durch Umesterung von durch radikalische Polymerisation erhaltenen Polyacrylsäureestern in Gegenwart von an sich bekannten Umesterungskatalysatoren wie Natriummethylat, Methansulfonsäure oder Trifluoressigsäure. Nachteilig an diesem Verfahren sind die hohen Temperaturen von 70 - 160°C, bevorzugt von 110 - 150°C, weshalb keine temperaturlabilen Verbindungen eingesetzt werden können.

WO 2004/042069 betrifft ein Verfahren zur Herstellung strahlenhärtbarer und/oder Dual-(Cure-)härtbarer Poly(meth)acrylate. Bei diesem Verfahren werden Polymere hergestellt durch Polymerisation von mindestens einem (Meth)acrylat (Komponente A) sowie mindestens einem Hydroxyalkyl(meth)acrylat (Komponente B). Komponente B weist in der Esterfunktion einen Alkylrest auf, der wiederum mit Hydroxyl substituiert ist. Diese hydroxyfunktionelle Seitenkette (aus Komponente B stammend) wird im erhaltenen Polymer durch Um- oder Veresterung mit (Meth)acrylat oder(Meth)acrylsäure erneut umgesetzt. Diese Umsetzung findet in Anwesenheit eines die Um- oder Veresterung katalysierenden Enzyms statt, insbesondere in Gegenwart von Lipasen, Esterasen oder Proteasen.

In der Literatur gibt es für die enzymatische Um- oder Veresterung von Säuregruppen in Polymeren weitere Beispiele. So betrifft US-A 2004/0082023 ein Verfahren bei dem in Gegenwart eines Enzyms, vorzugsweise einer Lipase, ein Polymer, das mindestens eine Carboxylgruppe aufweist, mit einem Alkohol verestert wird. Als konkrete Ausführungsbeispiele werden unter anderem die Veresterung von Poly-L-Glutarsäure beziehungsweise von DL-Polyasparsäure mit Glycerol in Gegenwart des Enzyms Novozym-435 beschrieben. Weiterhin wird die Umsetzung von Polyacrylsäure mit Ethylenglycol sowie Glycerol beschrieben. Bezüglich dieser Umsetzung ist festzustellen, dass diese nur zu einem sehr geringen Grad abläuft, unabhängig davon, ob ein Enzym anwesend ist oder nicht. US-A 2004/0082023 offenbart jedoch nicht, dass die Gegenwart von Enzymen einen Einfluss auf die Modifizierung von Poly(meth)acrylaten haben könnte. Von der Anmelderin durchgeführte Vergleichsversuche zeigen jedoch, dass die Gegenwart von Enzymen bei der Veresterung von direkt an das Polymerrückgrat gebundenen Säuregruppen zu einem noch geringeren Umsatz führt.

K. Pavel et al. Makromol. Chem. 194, 3369-3376 (1993) beschreiben die lipasekatalysierte Veresterung von Carboxylendgruppen von Methacrylsäure und Oligomeren mit Isopropylalkohol. Als Lipase wird dabei eine Lipase aus Candida cylindracea verwendet. Alternativ kann das eingesetzte Monomer (α-(11-methacrylolylaminoundecanoyl)-ω-hydroxy-oligo(oxyundecamethylencarbonyl) auch in Gegenwart von Styrol bzw. weiteren Copolymeren polymerisiert und das dabei erhaltene Polymer mit der gleichen Lipase verestert werden. Bei den dabei erhaltenen Polymeren findet die Veresterung in einer Seitenkette des Polymerrückgrats statt, wobei die sowohl eine Amidbindung als auch mehrere Esterbindungen aufweisende Seitenkette durch die anwesende Lipase teilweise abgebaut wird, d. h. es fand statt einer Veresterung des Polymeren ein teilweise Abbau der dem Polymer zugrunde liegenden Monomereinheit statt. Das von K. Pavel et. al. beschriebene Verfahren hat somit den Nachteil, dass damit sehr uneinheitliche Produkte hergestellt werden.

P. Inprakhon et al., Designed Monomers and Polymers, (2001), 4, Seiten 95-106 beschreiben die lipasekatalysierte Umesterung von Oligomethylacrylaten mit Zimtalkohol unter Verwendung einer Lipase aus Rhizomucor miehei. Die Umesterung verläuft jedoch nur regioslektiv an den Endgruppen des Oligomeren ab. Estergruppen des Methacrylsäurebausteines, die sich nicht am Ende des Oligomeren, sondern an dessen Rückgrat befinden, wurden jedoch nicht modifiziert. Analoge Ergebnisse werden in T. Lalot et al., Polymer Bulletin 26, Seiten 55-62 (1991) beschrieben, wo nur die Endgruppen von Oligomethylacrylaten durch Allylalkohol in Gegenwart von Lipozymen umgeestert werden. R. Kumar et al., Chem.Commun., 2004, Seiten 862-863 beschreiben die enzymkatalysierte Veresterung von Polyethylenglycoldisäure mit 4-Hydroxymethylphenol zum an einer endständigen Säuregruppe veresterten Polymer.

Die der vorliegenden Erfindung zugrunde liegende Aufgabe besteht in der Bereitstellung eines alternativen Verfahrens zur Modifikation von Poly(meth)acrylaten. Erfindungsgemäß wird diese Aufgabe gelöst, durch ein Verfahren zur Um- oder Veresterung von Seitenketten in Polymeren umfassend die folgenden Schritte
a) Herstellung eines Copolymeren erhältlich durch Polymerisation von
   aa) mindestens einem (Meth)acrylat der allgemeinen Formel (I), als Komponente A, 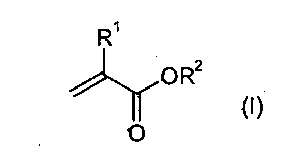 worin
      - R¹: H oder CH₃ bedeutet, und
      - R²: H oder ein Alkylrest ist, der gegebenenfalls mit funktionellen Gruppen wie Acryl-, Ether-, Amino-, Epoxy-, Halogen- oder Sulfonsäuregruppen substituiert ist, und
   ab) mindestens einem Monomeren der allgemeinen Formel (II), als Komponente B, 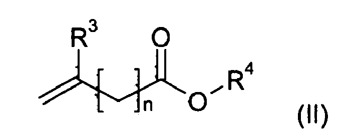 worin
      - R³: die gleiche Bedeutung wie R¹ hat,
      - R⁴: die gleiche Bedeutung wie R² hat, und n = 1 bis 40 ist,
      und
b) Um- oder Veresterung der den Rest R⁴ aufweisenden Carboxylgruppe mit einem Alkohol in Anwesenheit eines die Um- oder Veresterung katalysierenden Enzyms.

Im Rahmen der vorliegenden Erfindung wird als Abkürzung für "Methacrylsäure oder Acrylsäure" der Begriff "(Meth)acrylsäure" verwendet, entsprechend wird als Abkürzung für "Methacrylat oder Acrylat" der Begriff "(Meth)acrylat" verwendet. Sinngemäßes gilt für die daraus entstehenden Polymere, die als "Poly(meth)acrylate" bezeichnet werden. Unter "Poly(meth)acrylate" sollen im Rahmen der vorliegenden Erfindung Polymere oder Copolymere verstanden werden, die als Monomerenbaustein mindestens ein Monomer aus der Gruppe aus Acrylsäure, Methacrylsäure, Acrylat oder Metacrylat gemäß der Definition von Komponente A enthalten. Dies bedeutet, dass auch die erfindungsgemäßen Copolymere erhältlich durch Polymerisation von beispielsweise Acrylat mit mindestens einem weiteren Monomeren gemäß Komponente B, das nicht unter die vorstehend aufgeführte Gruppe (Komponente A) fällt, von diesem Begriff umfasst werden. Ein Beispiel für ein solches Monomer (Komponente B) ist Butyl-10-undecenoat.

Ein Vorteil des erfindungsgemäßen Verfahrens liegt darin, dass auf einfache Weise Poly(meth)acrylate hergestellt bzw. modifiziert werden können, in dem neben der Komponente A mit der Komponente B ein weiterer Monomerenbaustein eingeführt wird, bei dem die Carboxylgruppe nicht in α-Stellung an die Olefinbindung geknüpft ist. Die Carboxylgruppe ist somit nicht direkt an das Polymerrückgrat gebunden. Dieser Monomerenbaustein B kann im Polymer auf einfache Weise mit einem Alkohol modifiziert werden, sodass selektiv mit einem hohen Umsetzungsgrad eine Um- oder Veresterung des Polymers (erhalten in Schritt a) des erfindungsgemäßen Verfahrens) stattfindet. Im Gegensatz zu den im Stand der Technik beschriebenen Verfahren findet nicht nur eine Modifizierung der Endgruppen des Polymers statt, sondern es findet insbesondere eine Modifizierung der Polymerseitenketten statt, bei denen die Carboxylgruppe über einen Alkylspacer an das Polymerrückgrat gebunden ist. Besonders vorteilhaft ist dabei, dass durch die Einführung des Alkylspacers die aus Komponente B stammenden Carboxylgruppen selektiv und mit großen Umsätzen um- oder verestert werden können.

Ein weiterer Vorteil des erfindungsgemäßen Verfahrens, insbesondere gegenüber dem in K. Pavel et al. beschriebenen Verfahrens, ist darin zu sehen, dass in den Seitenketten kein Abbau erfolgt. Das erfindungsgemäße Verfahren ermöglicht vielmehr eine stabile Modifizierung der Seitenketten. Weiterhin ist vorteilhaft, dass das erfindungsgemäße Verfahren in kurzen Reaktionszeiten von 2 bis 48 Stunden stattfindet.

Da im erfindungsgemäßen Verfahren der in Schritt b) eingesetzte Alkohol variabel ist, können auf diese Art auch weitere funktionelle Gruppen in das in Schritt a) hergestellte Polymer eingeführt werden, wodurch eine abermalige Modifizierung des in Schritt b) hergestellten Polymers möglich ist.

Durch das erfindungsgemäße Verfahren können somit neuartige, mit Alkoholen modifizierte Poly(meth)acrylate zugänglich gemacht werden.

### Schritt a)

Schritt a) umfasst die Herstellung eines Copolymeren erhältlich durch Polymerisation von mindestens einer Komponente A, mindestens einer Komponente B und gegebenenfalls einer oder mehrere Komponenten C. Die Komponente A ist (mindestens) ein (Meth)acrylat der allgemeinen Formel (I), 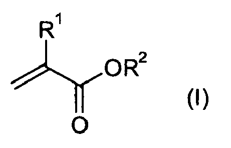 worin
- R¹: H oder CH₃ bedeutet, und
- R²: H oder ein Alkylrest ist, der gegebenenfalls mit funktionellen Gruppen wie Acryl-, Ether-, Amino-, Epoxy-, Halogen- oder Sulfonsäuregruppen substituiert ist.

Vorzugsweise wird in Schritt a) ein Monomer der allgemeinen Formel (I) als Komponente A verwendet. Vorzugsweise ist die Komponente A ein C₁-C₆-Alkylacrylat oder ein C₁-C₆-Alkylmethacrylat, Methacrylsäure oder Acrylsäure. Besonders bevorzugt ist Komponente A Acrylsäure, Methacrylsäure, Methylacrylat, Ethylacrylat oder Butylacrylat.

Als Komponente B wird im erfindungsgemäßen Verfahren in Schritt a) (mindestens) ein Monomer der allgemeinen Formel (II) eingesetzt, 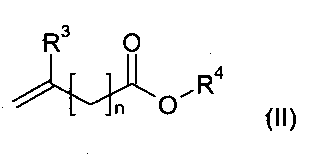 worin
- R³: die gleiche Bedeutung wie R¹ hat,
- R⁴: die gleiche Bedeutung wie R². hat, und n = 1 bis 40 ist.

Vorzugsweise wird in Schritt a) ein Monomer der allgemeinen Formel (II) verwendet. Als Komponente B sind Monomere bevorzugt, in denen R³ = H oder CH₃, n = 2 bis 8 und R⁴ = C₁-C₄-Alkyl sind. Besonders bevorzugt sind als Komponente B Monomere, worin R³ = H, n = 2 bis 8 und R⁴ = C₁-C₄-Alkyl sind, insbesondere Butyl-10-undecenoat oder Ethyl-4-pentenoat.

Gegebenenfalls können in Schritt a) als Komponente C (mindestens) ein weiteres Monomer mit den Komponenten A und B copolymerisiert werden. Als Komponente C sind prinzipiell alle Monomere geeignet, die mit den Monomeren der allgemeinen Formeln (I) und (II) copolymerisierbar sind. Sofern Komponente C vorhanden ist, wird vorzugsweise ein weiteres Monomer als Komponente C copolymierisiert. Vorzugsweise wird als Komponente C ein Monomer ausgewählt aus der Gruppe bestehend aus Styrol, Acrylnitril, Vinylacetat, Vinylpropionat, Vinylchlorid, Vinylidenchlorid, Itaconsäure, Maleinsäure, Fumarsäure, Crotonsäure und den Amiden der genannten Säuren eingesetzt. Besonders bevorzugt ist Komponente C ausgewählt aus Styrol, Acrylnitril, Vinylacetat, Vinylpropionat, Vinylchlorid oder Vinylidenchlorid.

Sofern nicht anders aufgeführt, bedeutet der Begriff Alkylrest, beispielsweise für die Substituenten R² oder R⁴, ein C₁-C₃₀-Alkylrest, der sowohl linear als auch verzweigt sowie zyklisch sein kann. Alkylreste, die sowohl eine zyklische als auch eine lineare Komponente aufweisen, fallen auch unter diese Definition. Vorzugsweise handelt es sich um einen C₁-C₁₈-Alkylrest, mehr bevorzugt um einen C₁-C₈-Alkylrest, besonders bevorzugt um einen C₁-C₄-Alkylrest. Gegebenenfalls können die Alkylreste auch mit funktionellen Gruppen wie Acryl-, Ether-, Amino-, Epoxy-, Halogen- oder Sulfonsäuregruppen einfach oder mehrfach substituiert sein. Beispiele für Alkylreste sind: Methyl-Ethyl-, n-Propyl-, Iso-Propyl-, n-Butyl-, Iso-Butyl-, 2-Ethylhexyl-, tert.-Butyl-, Cyclohexyl-, tert.-Butylcyclohexyl-, Isobornyl- oder Trimethylcyclohexyl.

In einer bevorzugten Ausführungsform des erfindungsgemäßen Verfahrens werden in Schritt a)
- 10 bis 90 Gew.-%, bevorzugt 20 bis 80 Gew.-%, besonders bevorzugt 40 bis 70 Gew.-% der Komponente A, und
- 10 bis 90 Gew.-%, bevorzugt 20 bis 70 Gew.-%, besonders bevorzugt 30 bis 60 Gew.-% der Komponente B, und
- 0 bis 50 Gew.-%, bevorzugt 0 bis 40 Gew.-%, besonders bevorzugt 0 bis 25 Gew.-% der Komponente C, eingesetzt.

Die in Schritt a) hergestellten, in der Seitenkette Carboxylgruppen aufweisenden Poly(meth)acrylate können nach verschiedenen, dem Fachmann bekannten Verfahren hergestellt werden. Dabei ist die Herstellung durch radikalische Polymerisation bevorzugt.

Die Polymerisation erfolgt im Allgemeinen durch Emulsions-, Lösungs- oder Substanzpolymerisation, wobei die Lösungspolymerisation bevorzugt ist.

In einer Ausführungsform werden die in den Seitenketten Carboxylgruppen aufweisenden Poly(meth)acrylate gemäß Schritt a) durch Emulsionspolymerisation hergestellt. Bei der Emulsionspolymerisation werden die Komponenten A, B sowie gegebenenfalls C in Anwesenheit von Wasser, Emulgatoren, Initiatoren und gegebenenfalls Reglern miteinander umgesetzt.

Als Emulgatoren werden im Allgemeinen anionische, nichtionische, kationische oder amphotere Emulgatoren eingesetzt, wobei anionische oder nichtionische Emulgatoren bevorzugt sind. Geeignete anionische Emulgatoren sind Natrium-, Kalium- oder Ammoniumsalze langkettiger aliphatischer Carbonsäuren und Sulfonsäuren, Alkali-C₁₂₋₁₆-Alkylsulfate, oxethylierte und sulfatierte oder sulfonierte langkettige aliphatische Alkohole oder Alkylphenole und Sulfodicarbonsäureester. Geeignete nichtionische Emulgatoren sind oxethylierte Fettalkohole und Alkylphenole, wobei die Ethylenoxideinheiten zwischen 2 und 50 mol/mol betragen können. Geeignete kationische Emulgatoren sind Ammonium-, Phosphonium- und Sulfoniumverbindungen, die als hydrophoben Molekülteil mindestens eine lange aliphatische Kohlenwasserstoffkette enthalten. Es ist auch möglich, eine Kombination von verschiedenen Emulgatoren, zum Beispiel von ionischen und nichtionischen Emulgatoren, einzusetzen.

Das eingesetzte Wasser ist bevorzugt destilliert oder entsalzt, da Salze die Emulsionsstabilität beeinträchtigen können. Im Allgemeinen wird das Polymerisationsverfahren unter Stickstoff durchgeführt, da Sauerstoff die Polymerisation inhibiert.

Das Molekulargewicht der in Schritt a) hergestellten Poly(meth)acrylate kann durch Zugabe von Reglern erniedrigt werden. Geeignete Regler sind zum Beispiel halogenhaltige Verbindungen wie Tetrachlorkohlenstoff, Tetrabromkohlenstoff, Bromal, Benzylbromid und Trichlorbrommethan oder Mercaptane wie Butylmercaptan oder Dodecylmercaptan oder Rongalit® C.

Als Initiatoren sind im Allgemeinen alle dem Fachmann bekannten Initiatoren zur Polymerisation von (Meth)acrylaten geeignet. Im Allgemeinen werden wasserlösliche Peroxoverbindungen wie Alkali- oder Ammoniumpersulfat, Wasserstoffperoxid oder tert.Butyl-Peroxy-Ethylhexanoat eingesetzt. Des weiteren sind Redox-Systeme wie H₂O₂-Ascorbinsäure, H₂O₂-Fe(II)/Fe(III), H₂O₂-Ce(IV), Persulfite-Fe, Metabisulfite-Fe oder Hydroperoxide-Metallsalze geeignet. Die Initiatoren werden im Allgemeinen in einer Menge von 0,05 bis 8 Gew.-%, bevorzugt 0,2 bis 2 Gew.-%, bezogen auf Menge der eingesetzten Monomere, eingesetzt.

Gegebenenfalls nach der Polymerisation noch vorhandener Initiator kann nach der Polymerisation deaktiviert werden, um eine mögliche Polymerisation der in Schritt b) erfingdungsgemäß hergestellten Poly(meth)acrylate zu vermeiden. Die Deaktivierung erfolgt im Allgemeinen durch Zugabe eines Reduktionsmittels, z.B. Ascorbinsäure.

Die Polymerisation wird im Allgemeinen in einem Temperaturbereich von 30 bis 120°C, bevorzugt 40 bis 110°C, besonders bevorzugt 50 bis 90°C durchgeführt. Die Polymerisation wird im Allgemeinen bei einem Druck von 1 bis 20, bevorzugt 1 bis 15 bar, besonders bevorzugt 1 bis 5 bar durchgeführt.

Die Emulgatoren werden im Allgemeinen in einer Menge von 0,5 bis 15 Gew.-%, bevorzugt von 0,5 bis 10 Gew.-%, besonders bevorzugt 0,5 bis 5 Gew.-%, bezogen auf die Menge der eingesetzten Komponenten A, B und gegebenenfalls C, eingesetzt.

Der Teilchendurchmesser der nach Polymerisation erhaltenen Poly(meth)acrylate beträgt im Allgemeinen 20 bis 1000 nm, bevorzugt 20 bis 500 nm, besonders bevorzugt 50 bis 400 nm, ermittelt mittels Lichtstreuung.

Der pH-Wert beträgt bei der Emulsionspolymerisation im Allgemeinen zwischen 1 und 6, bevorzugt zwischen 2 und 6. die Hydroxylzahlen betragen im Allgemeinen mindestens 20 bis 180, bevorzugt mindestens 40 bis 120. Der Fetsstoffgehalt der Dispersionen beträgt im Allgemeinen 10 bis 50, bevorzugt 20 bis 40 und die Glasübergangstemperatur der erhaltenen Polymere beträgt im Allgemeinen zwischen -40 und +80°C.

In einer weiteren bevorzugten Ausführungsform werden die in den Seitenketten Carboxylgruppen aufweisenden Poly(meth)acrylate gemäß Schritt a) durch Lösungspolymerisation hergestellt. Bei der Lösungspolymerisation werden die Komponenten A, B sowie gegebenenfalls C in Anwesenheit von Lösungsmittel, Initiator und gegebenenfalls Reglern miteinander umgesetzt.

Solche Lösungspolymerisationsverfahren sind bekannt. Diese finden üblicherweise in inerten organischen Lösungsmitteln statt, in denen die entstandenen Polymere löslich sind und darin nach Abschluss der Polymerisation häufig in Mengen von über 10 Gew.-% vorliegen können. Die Reaktionen finden dabei üblicherweise in Gegenwart von Radikale bildenden Polymerisationsinitiatoren statt. Weiterhin können Kettenüberträger eingesetzt werden.

Weiterhin können Schutzkolloide eingesetzt werden. Diese können beispielsweise im Bereich von 0,05 bis 4 Gew.-%, bezogen auf die bei der Polymerisation eingesetzten Monomeren, vorhanden sein. Setzt man als Schutzkolloide Polymerisate von C₁- bis C₁₂-Alkylvinylether ein, so besitzen diese vorzugsweise K-Werte von 10 bis 200 (gemessen nach H. Fikentscher in Cyclohexanon bei einer Rolymerisationskonzentration von 1 Gew.-% und 25°C).

Als organische Lösemittel werden typischerweise inerte organische Lösemittel, wie sie im Stand der Technik für die Herstellung der oben genannten Verbindungen bekannt sind, eingesetzt.

Beispielsweise verwendet man aromatische Lösemittel wie Benzol, Toluol, o-Xylol, m-Xylol, p-Xylol, Ethylbenzol, Cumol sowie Mischungen der genannten aromatischen Lösemittel in einem geeigneten Verhältnis. Für die Praxis haben insbesondere die in der Technik üblichen Gemische von Aromaten Bedeutung, zum Beispiel Mischungen der Xylole.

Bevorzugt sind Lösungsmittel, die für eine enzymatische Umsetzung gemäß Schritt b) nicht störend sind, so dass eine Entfernung des Lösungsmittels vor der Ausführung von Schritt b) nicht erforderlich ist. Mehr bevorzugt werden Lösungsmittel ausgewählt aus Toluol, Cyclohexan, 1,3-Dioxan, Methyl-iso-butylether, ionische Flüssigkeiten, tert-Butanol, Methylisobutylketon, Aceton, Xylol, N-Methylpyrrolidon, Methylethylketon, Methylpropylketon, Methylamylketon und Solventnaphtha, eingesetzt. Vorzugsweise wird das Lösungsmittel so ausgesucht, dass es in etwa mit der Polarität des herzustellenden Polymers (in Schritt a)) übereinstimmt.

Die Copolymerisation der Monomeren A und B sowie gegebenenfalls weitere Monomere erfolgt typischerweise in Gegenwart von Radikale bildenden Polymerisationsinitiatoren. Für die Herstellung geeignete Initiatoren sind beispielsweise aus EP-B 0 106 991 bekannt. Sie werden typischerweise in Mengen von 0,01 bis 20, vorzugsweise 0,05 bis 10 Gew.-%, bezogen auf die bei der Polymerisation eingesetzten Monomeren, eingesetzt. Die Copolymerisation kann auch durch Einwirkung von ultravioletter Strahlung, gegebenenfalls in Gegenwart von UV-Initiatoren durchgeführt werden. Solche Initiatoren sind beispielsweise Verbindungen, wie Benzoin und Benzoinether, α-Methylbenzoin oder α-Phenylbenzoin. Auch so genannte Triplett-Sensibilisatoren, wie Benzyldiketale, können verwendet werden. Als UV-Strahlungsquellen dienen beispielsweise neben energiereichen UV-Lampen, wie Kohlebogenlampen, Quecksilberdampflampen oder Xenonlampen auch UV-arme Lichtquellen, wie Leuchtstoffröhren mit hohem Blauanteil.

Für die Lösungspolymerisation vorzugsweise geeignete Initiatoren sind Peroxide wie Dialkylperoxide, zum Beispiel Di-tert.-Butylperoxid und Di-tert.-Amylperoxid, Peroxiester wie tert.-Butylperoxy-2-ethylhexanoat und tert.-Amylperoxy-2-ethylhexanoat, Diacylperoxide wie Benzoylperoxid, Lauroylperoxid und Decanoylperoxid, Percarbonate wie tert.-Butylperoxyisopropylcarbonat, Di-2-ethylhexylperoxidicarbonat, Perketale und Ketonperoxide, sowie Azoinitiatoren wie 2,2'-Azobis-(2,4-Dimethyl-pentannitril), 2,2'-Azobis-(2-Methylpropanonitril), 2,2'-Azobis-(2-Methylbutanonitril), 1,1'-Azobis-(Cyclohexancarbonitril), 2,2'-Azobis-(2,4,4-trimethylpentan), 2-Phenylazo-2,4-dimethyl-4-methoxyvaleronitril und 2,2'-Azobis-(Isobutyronitril) [AIBN], dass beispielsweise unter dem Handelsnamen Porofor N kommerziell erhältlich ist.

Sollen die Copolymerisate einen niedrigen K-Wert aufweisen, wird die Copolymerisation zweckmäßigerweise in Gegenwart von Reglern durchgeführt. Geeignete Regler sind beispielsweise Mercaptoverbindungen, wie Mercaptoethanol, Mercaptopropanol, Mercaptobutanol, Mercaptoessigsäure, Mercaptopropionsäure, Butylmercaptan und Dodecylmercaptan. Als Regler eignen sich außerdem Allylverbindungen, wie Allylalkohol, Aldehyde, wie Formaldehyd, Acetaldehyd, Propionaldehyd, n-Butyraldehyd und Isobutyraldehyd, Ameisensäure, Ammoniumformiat, Propionsäure und Butenole. FaHs die Copolymerisation in Gegenwart von Reglern durchgeführt wird, benötigt man davon in der Regel 0,05 bis 20 Gew.%, bezogen auf die bei der Polymerisation eingesetzten Monomeren.

Geeignete Schutzkolloide sind Polyalkylvinylether mit 1 bis 12 C-Atomen im Alkylrest. Die K-Werte der Polyalkylvinylether betragen typischerweise 10 bis 200, vorzugsweise 20 bis 100 (gemessen in 1%iger Lösung in Cyclohexanon bei 25°C).

Geeignete Polyalkylvinylether sind beispielsweise Polymethylvinylether, Polyethylvinylether, Polypropylvinylether, Polyisopropylvinylether, Polybutylvinylether, Polyisobutylvinylether und Polyhydroxybutylvinylether sowie Mischungen der genannten Polyalkylvinylether. Vorzugsweise verwendet man als Schutzkolloid Polyethylvinylether. Die zugesetzte Menge an Schutzkolloid beträgt üblicherweise 0,05 bis 4, vorzugsweise 0,1 bis 2 Gew.-%, bezogen auf die bei der Polymerisation jeweils eingesetzten Monomeren.

Die Polymerisation erfolgt üblicherweise bei Temperaturen von 30°C bis 200°C, vorzugsweise 50°C bis 160°C. Niedrigere Polymerisationstemperaturen werden zur Herstellung schwach vernetzter und hochmolekularer Copolymerisate angewendet, während man hohe Polymerisationstemperaturen zur Herstellung von Polymerisaten mit niedrigen K-Werten wählt. Die Molekulargewichte hängen außerdem noch von der Menge der jeweils eingesetzten Polymerisationsinitiatoren ab. Die Copolymerisation kann bei Normaldruck, bei vermindertem Druck sowie gegebenenfalls unter erhöhtem Druck durchgeführt werden, z. B. bei Drücken von 1 bis 200 bar, vorzugsweise wird die Copolymerisation bei Normaldruck durchgeführt.

Um schwach vernetzte und besonders hochmolekulare Copolymerisate herzustellen, werden das organische Lösemittel, das gegebenenfalls vorhandene Schutzkolloid und die Monomeren im Reaktor vorgelegt und im Stickstoffstrom bei der gewünschten Polymerisationstemperatur durch langsames kontinuierliches und portionsweises Zugeben des Initiators polymerisiert. Der Initiator wird dabei in der Weise dosiert, dass die gebildete Reaktionswärme kontrolliert abgeführt werden kann. Das Polymer kann als Suspension in Form von feinkörnigen Teilchen anfallen und durch Trocknen als Pulver isoliert werden oder in Lösung bleiben (Fällungs- oder Lösungspolymerisation).

Um mittel- und niedrigmolekulare Copolymerisate herzustellen, wird das Lösungsmittel, das gegebenenfalls vorhandene Schutzkolloid und das Monomer gemäß Komponente B im Reaktor vorgelegt, im Stickstoffstrom auf die gewünschte Polymerisationstemperatur erhitzt und dann das Monomer gemäß Komponente A sowie gegebenenfalls das Monomer gemäß Komponente C über einen längeren Zeitraum, bevorzugt innerhalb von 2 bis 8 Stunden, kontinuierlich oder portionsweise zudosiert. Nach Ende der Copolymerisation kann das Polymer von dem organischen Lösemittel getrennt werden.

Die in Schritt a) erhaltenen Poly(meth)acrylate weisen im Allgemeinen ein mittleres Molekulargewicht von 1000 bis 1 000 000, bevorzugt 5000 bis 500 000, besonders bevorzugt 10 000 bis 200 000 auf. Das mittlere Molekulargewicht wurde mittels Gelpermeationschromatographie (GPC) ermittelt. Es handelt sich hierbei um das gewichtsmittlere Molekulargewicht (M_{w}).

Die Herstellung der Poly(meth)acrylate in Schritt a) ist mittels Eintopf- oder Batchfahrweise, Zulaufverfahren und kontinuierlichen Fahrweisen möglich. Die Durchführung der genannten Fahrweisen ist dem Fachmann bekannt.

Das in Schritt a) erhaltene in den Seitenketten Carboxylgruppen aufweisende Poly(meth)acrylat kann nach dem Fachmann bekannten Methoden isoliert werden. Eine Ausführungsweise ist z.B. in EP-A 0 029 637 beschrieben.

### Schritt b)

Die in Schritt a) hergestellten Copolymere werden anschließend in Schritt b) einer Um- oder Veresterung mit einem Alkohol in Anwesenheit eines die Um- oder Veresterung katalysierenden Enzyms unterzogen. Dabei werden überwiegend die den Rest R⁴ aufweisenden Carboxylgruppen um- oder verestert. Die von der Komponente A stammenden Carboxylgruppen werden hingegen nicht oder nur zu einem sehr geringen Anteil um- oder verestert. Schritt b) kann gegebenenfalls in Anwesenheit eines Stabilisators durchgeführt werden.

Als Alkohol eignen sich prinzipiell alle Alkohole, vorzugsweise wird ein Alkohol eingesetzt, gegebenenfalls können jedoch zwei oder mehr Alkohole in Form eines Gemisches eingesetzt werden. Bevorzugt ist der Alkohol ausgewählt aus Zucker, Thioalkohol, Aminoalkohol, ungesättigten Alkoholen, gesättigten aliphatischen Alkoholen oder Polyolen. Beispiele für Zucker sind Glukose, Saccharose, Sorbit oder Methylglukocid. Als Thioalkohole eignen sich prinzipiell alle Verbindungen, die sowohl einen Hydroxysubstituenten als auch einen Mercaptosubstituenten aufweisen. Bevorzugte Thioalkohole haben die chemische Formel: HO-(C₁-C₈-Alkyl)-SH, insbesondere Mercaptoethanol. Als Aminoalkohole eignen sich prinzipiell alle Verbindungen, die einen Hydroxysubstituenten und einen Aminosubstituenten aufweisen. Als Aminosubstituent kommen insbesondere -NH₂, -NH(C₁-C₆-Alkyl) und -N(C₁-C₆-Alkyl)₂ in Frage, wobei gegebenenfalls die Aminosubstituenten wiederum zumindest monosubstituiert sein können, beispielsweise mit einem oder mehreren Substituenten aus der Gruppe -COOH, - SO₃H, -PO₃H₂, -CH₂COOH und -CH₂N(CH₂COOH)₂. Bevorzugte Aminoalkohole sind Verbindungen der allgemeinen Formel (III), 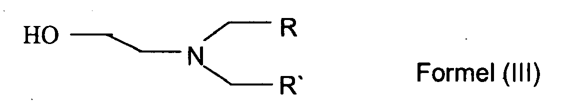 worin
1. R = R'= COOH, SO₃H, PO₃H₂ oder H oder
2. R = CH₂COOH, R'= CH₂N(CH₂COOH)₂ sind.

Besonders bevorzugte Aminoalkohole sind Aminoethanol und Dimethylaminoethanol. Als ungesättigte Alkohole eignen sich beispielsweise Propargylalkohol sowie Allylalkohol, prinzipiell sind auch aromatische Alkohole wie Phenol geeignet. Gesättigte aliphatische Alkohole sind Verbindungen, die eine C₁-C₃₀-Alkylkette sowie einen Hydroxylsubstituenten aufweisen. Bevorzugt sind hierbei C₈-C₁₈-Alkylalkohole, insbesondere Laurylalkohol. Als Polyole eignen sich prinzipiell alle Verbindungen, die mindestens zwei Hydroxysubstuenten aufweisen. Im Rahmen der vorliegenden Verbindung sollen unter dem Begriff Polyole auch Verbindungen verstanden werden, wie sie in EP-A 386 507 definiert sind, also solche Verbindungen, die (CH₂-CH₂-O-)ₙ Fragmente enthalten. Bevorzugte Polyole sind Butandiol, Ethylenglycol oder Glycerol.

In einer Ausführungsform der vorliegenden Erfindung werden als Alkohole in Schritt b) Zucker, Thioalkohole, Aminoalkohole oder Polyole eingesetzt.

In einer bevorzugten Ausführungsform der vorliegenden Erfindung werden in Schritt b) Thioalkohole oder Aminoalkohole eingesetzt. Besonders bevorzugt werden als Alkohol in Schritt b) Mercaptoethanol, Dimethylaminoalkohol oder Laurylakohol eingesetzt.

In einer weiteren Ausführungsform der vorliegenden Erfindung werden in Schritt b) gesättigte aliphatische Alkohole eingesetzt, vorzugsweise C₈-C₃₀-Alkylakohole.

In dieser weiteren Ausführungsform der vorliegenden Erfindung werden in Schritt b) bevorzugt C₈-C₁₈-Alkylakohole eingesetzt, besonders bevorzugt Laurylalkohol.

In einer weiteren bevorzugten Ausführungsform der vorliegenden Erfindung werden in Schritt b) Alkohole eingesetzt, die außer einem Hydroxysubstituenten mindestens eine weitere funktionelle Gruppe aufweisen. Vorzugsweise ist diese funktionelle Gruppe eine Thio-, Amino-, oder eine weitere Hydroxygruppe.

Als die Um- oder Veresterung katalysierende Enzyme werden bevorzugt Hydrolasen eingesetzt. Hydrolasen im Sinne der vorliegenden Erfindung sind Enzyme, die Stoffe in reversibler Reaktion hydrolytisch spalten. Die von den Hydrolasen katalysierte Reaktion wird auch durch die EC-Nummer (enzyme commission number) EC 3.X.X.X klassifiziert. Geeignete Hydrolasen sind dem Fachmann bekannt, z.B. Amidasen, Amylasen, Carboxypeptidasen, Chymotrypsin, Desoxyribonuklease, Esterasen, Glycosidasen, Hemizellulasen, Lactasen, Peptidasen, Trypsin, Ureasen, Lipasen oder Proteasen. Enzyme, die die Um- oder Veresterung katalysieren, wie die zuvor genannten Hydrolasen, und besonders gut für den Einsatz in den erfindungsgemäßen Verfahren geeignet sind, können durch ein Enyzm-Screening, wie in Beispiel 1 beschrieben, identifiziert werden. Geeignete Hydrolasen setzen in dem Screening-Verfahren nach Beispiel 1 mehr als 0 %, bevorzugt mehr als 10 %, mehr als 20 %, mehr als 30 %, mehr als 40 %, mehr als 50 % oder mehr als 60 % an Substrat um.

Insbesondere können die Hydrolasen ausgewählt sein aus der Gruppe bestehend aus Lipasen (EC 3.1.1.3), Esterasen (EC 3.1.X.X), Glykosylasen (EC 3.2.X.X) und Proteasen (EC 3.4.X.X). Mehr bevorzugt als Enzym ist eine Lipase aus der Fraktion B von Candida antarctica, aus Alcaligenes species, aus Aspergillus species, aus Mucor species, aus Penicilinum species, aus Geotricum species, aus Rhizopus species, aus Burkholderia species, aus Burkholderia plantarii, aus Candida species, aus Pseudomonas species, aus Thermomyces species oder aus der Schweinepankreas. Besonders bevorzugt sind Lipasen aus der Fraktion B von Candida antarctica oder aus Burkholderia plantarii.

Lipasen aus der Fraktion B von Candida antarctica, die im erfindungsgemäßen Verfahren verwendet werden können, haben bevorzugt eine Aminosäuresequenz wie in einer der nachfolgenden Genbank-Zugangsnummer hinterlegt: gi:1085991, gi:1170790, gi:1311320, gi:576303, gi:576302, g:576301, gi:576300, gi:576299 oder gi:515792. Lipasen aus Burkholderia species, die im erfindungsgemäßen Verfahren verwendet werden können, haben bevorzugt eine Aminosäuresequenz wie in einer der nachfolgenden Genbank-Zugangsnummer hinterlegt: gi:76583779, gi:69989725, gi:67763516, gi:67754522, gi:67711158, gi:67682447, gi:67662116, gi:67651564, gi:67647896, gi:67641733, gi:67632700, gi:67545107, gi:67533555, gi:67464317, gi:67464316, gi:6710422, gi:46314081, gi:3660419, gi:2194041, oder gi:576295. Die Genbank Datenbank ist erhältlich vom NCBI, USA (http://www.ncbi.ulm.nih.gov/entfez/query.fcgi). Weitere bevorzugte Lipasen sind in Beispiel 1 genannt und können mit im Stand der Technik bekannten Verfahren gewonnen werden.

Die in den erfindungsgemäßen Verfahren einzusetzenden Enzyme können in aufgereinigter Form vorliegen oder in Form von Zelllysaten eingesetzt werden. Verfahren zum Aufreinigen von Enzymen sind dem Fachmann bekannt und umfassen z.B. chromatographische Techniken und die Verwendung spezifischer Antikörper. Zelllysate können aus Kulturen der zuvor genannten Mikroorganismen durch Aufschluss der Zellmembranen gewonnen werden.

Die Enzyme können in freier Form oder immobilisierter Form auf einem Träger, auf dem sie chemisch oder physikalisch gebunden sind, eingesetzt werden. Die Menge des Enzymkatalysators beträgt bevorzugt 0,1 bis 20 Gew.-%, besonders bevorzugt 1 bis 10 Gew.-%, bezogen auf die Menge an ver- oder umzuesternden Carboxygruppen in dem in Schritt a) hergestellten Copolymeren.

Die enzymatische Um- oder Veresterung mit einem Alkohol erfolgt im Allgemeinen bei niedrigen Temperaturen, bevorzugt 20 bis 100 °C, besonders bevorzugt 40 bis 80 °C. Die Reaktionsbedingungen bei der enzymatischen Um- oder Veresterungen sind mild. Aufgrund der niedrigen Temperaturen und sonstigen milden Bedingungen wird die Bildung von Nebenprodukten in Schritt b) vermieden, die andernfalls zum Beispiel bei der Wendung von chemischen Katalysatoren (wie in EP-A 386 507 aufgeführt) entstehen können.

Zur enzymatischen Umsetzung (Schritt b)) kann das Produkt aus Schritt a) im Allgemeinen ohne weitere Vorbehandlung eingesetzt werden. Sofern in Schritt a) jedoch Wasser als Lösungsmittel eingesetzt worden ist, sollt das Wasser weitgehend vor der enzymatischen Umsetzung gemäß Schritt b) entfernt werden. Bei Bedarf kann das in Schritt a) hergestellte Produkt von flüchtigen Stoffen (z.B. Lösungsmitteln) befreit werden oder es können zusätzliche Stoffe (z.B. Lösungsmittel) zugesetzt werden. Das in Schritt a) zu erhaltende Produkt sollte möglichst frei von Radikalstartern oder arm an Radikalstartern sein, die das Enzym oxidativ schädigen könnten.

Die Reaktionszeit hängt unter anderem von der verwendeten Menge und der Aktivität des Enzymkatalysators und dem gewünschten Umsetzungsgrad ab sowie der Art der in der Seitenketten enthaltenen Carboxylgruppen.

Der zur Um- oder Veresterung eingesetzte Alkohol wird im Allgemeinen in äqumolaren Mengen oder in einem Überschuss im Verhältnis zur Anzahl der im Copolymeren enthaltenen Rest R⁴ aufweisenden Carboxylgruppen eingesetzt. Bevorzugt wird ein Molverhältnis Alkohol zu Carboxylgruppen von 1:1 bis 10:1. Höhere Überschüsse sind nicht störend. Besonders bevorzugt beträgt das Verhältnis 2 bis 4:1, insbesondere 3:1.

Im Allgemeinen werden in Schritt b) mindestens 10 %, bevorzugt mindestens 20 %, besonders bevorzugt mindestens 40 % aller einen Rest R⁴ aufweisenden Carboxylgruppen um- oder verestert.

Gegebenenfalls eingesetzte geeignete Stabilisatoren sind ausgewählt aus der Gruppe bestehend aus 2,6-Dibutylphenolen wie Di-tert.-butylphenol, p-Kresol, Hydrochinon, Hydrochinonmonomethylether, Dimethylhydrochinon oder Phenothiazinen. Es ist jedoch auch möglich, Schritt b) ohne Einsatz von Stabilisatoren durchzuführen.

Die Umsetzung kann in allen für eine solche Umsetzung geeigneten Reaktoren durch-geführt werden. Solche Reaktoren sind dem Fachmann bekannt. Bevorzugt erfolgt die Umsetzung in einem Rührkesselreaktor, einem Festbettreaktor oder einem Taylorreaktor.

Das während der Um- oder Veresterung entstehende Reaktionswasser bzw. der entstehende Alkohol kann nach dem Fachmann bekannten Methoden, zum Beispiel durch Absorption (zum Beispiel mit Molekularsieb), Destillation oder Pervaporation entfernt werden.

Die Reaktion wird solange durchgeführt, bis der gewünschte Umsatz, von im Allgemeinen 5 bis 100 % erreicht ist. Dabei lassen sich bei einer Reaktionsführung mit gleichzeitiger Entfernung des während der Umsetzung entstehenden Alkohols bzw. Wassers höhere Umsätze in kürzeren Reaktionszeiten aufgrund der Verschiebung des Reaktionsgleichgewichts erreichen.

Der Enzymkatalysator kann im Anschluss an die Umsetzung durch geeignete Maßnahmen, zum Beispiel Filtrieren oder Dekantieren abgetrennt werden und gegebenenfalls mehrfach eingesetzt werden.

Schritt b) kann gegebenenfalls in Gegenwart eines Lösungsmittels durchgeführt werden. Die Auswahl eines geeigneten Lösungsmittels richtet sich sehr stark nach der Löslichkeit des verwendenden Polymeren. Beispiele für geeignete Lösungsmittel sind Toluol, Tetrahydrofuran (THF), Dioxan, tert.-Butanol, Dimethylsulfoxid (DMSO), Aceton oder ionische Flüssigkeiten. Auch Mischungen von zwei oder mehreren davor genannten Lösungsmitteln sind geeignet. Gegebenenfalls kann auf ein Lösungsmittel auch verzichtet werden, wenn der zu veresternde Alkohol des Schritts b) die Auflösung oder Anlösung des Polymers bewirkt. Das Polymer wird im Lösungsmittel klar gelöst, emulgiert, dispergiert oder nur teilweise gelöst. Der Wassergehalt soll dabei < 10 Gew.-% betragen, um die Hydrolyse der Produkte zu unterdrücken. Vorzugsweise beträgt der Wassergehalt kleiner < 2 Gew.-% bezogen auf die Menge des eingesetzten Polymeren aus Schritt a).

Ein weiterer Gegenstand der vorliegenden Erfindung sind Polymere herstellbar nach dem vorstehend aufgeführten Verfahren. Bevorzugt sind hierbei Polymere, bei denen in Schritt b) des vorstehend beschriebenen Verfahrens eine weitere funktionelle Gruppe in die Seitenketten der von der Komponente B stammenden Fragmente eingeführt worden ist. Insbesondere handelt es sich dabei um eine Amino-, Mercaptho- oder eine weitere Hydroxygruppe. Weiterhin sind Polymere bevorzugt, bei denen der Um- oder Veresterungsgrad, der den Rest R⁴ aufweisenden Carboxylgruppe 10 %, vorzugsweise 20 %, insbesondere 40 % beträgt. In einer weiteren bevorzugten Ausführungsform sind die erfindungsgemäßen Polymere mit einem C₈-C₁₈-Alkohol, insbesondere mit Laurylalkohol verestert. Bevorzugt beträgt dieser Veresterungsgrad 20 %, insbesondere 40 %.

Ein weiterer Gegenstand der vorliegenden Erfindung betrifft die Verwendung der erfindungsgemäßen Polymere als Faserschutzmittel in Waschmitteln als Inkrustinationsinhibitor, zur Komplexierung von Metallen, als Vergrauungsinhibitor, in Korrosionsschutzmitteln zur Passivierung von Stahloberflächen, in Dispersionsfarben, in Bauchemikalien, in Klebstoffen, zur Papierherstellung, als Dispergiermittel, in Dispersionen, in Lacken und Beschichtungen oder als Komplexbildner. Je nachdem was für ein Alkohol in Schritt b) des erfindungsgemäßen Verfahrens zur Um- oder Veresterung eingesetzt wird, hat dies Einflüsse auf die Verwendungsart. Es eignen sich Alkohole, die zusätzlich eine Thiogruppe aufweisen besonders gut als Korrosionsschutzmittel, während Alkohole, die zusätzlich eine Aminogruppe aufweisen besonders gut als Waschmittelzusatz verwendet werden können.
Die Erfindung soll an den nachfolgenden Beispielen verdeutlicht werden.

### Beispiele

### Herstellung der Copolymere gemäß Schritt a)

### Copolymer 1

In einem prozessleitgesteuerten 2L-Pilotrührwerk mit Ankerrührer, Kühler und Ölbad werden, nachdem das Pilotrührwerk mit Stickstoff gespült wird, 200 g Toluol vorgelegt. Anschließend wird auf 85 °C aufgeheizt. Über einen ersten Zulauf werden über 5,5 h 595,0 g Ethylacrylat (70 Gew.-%) zudosiert. Über einen zweiten Zulauf werden über 4 h 260,2 g Butyl-10-undecenoat (30 Gew.-%) zudosiert. Über einen dritten Zulauf werden über 6,5 h 2,55 g Porofor N in 90 g Toluol (Feststoffgehalt: 2,7 % Porofor N in Toluol; 0,3 Gew.-% insgesamt) zudosiert. Die Zuläufe 1 bis 3 werden, sobald die Vorlage auf 85 °C erhitzt ist, zeitgleich gestartet, nach Ende des dritten Zulaufes wird noch eine Stunde nachpolymerisiert.

Der Feststoffgehalt des dabei erhaltenen Copolymers beträgt 62,8 % (bestimmt bei 120 °C über 2 h im Vakuum). Das Copolymer wird nachfolgend als Poly(ethylacrylat co-butylundecenoat) bezeichnet.

### Copolymer 2

Copolymer 2 wird sinngemäß zu Copolymer 1 hergestellt. In Zulauf 1 wird jedoch Butylacrylat eingesetzt. Der Feststoffgehalt des dabei erhaltenen Copolymers beträgt 63,1 % (bestimmt bei 120 °C im Vakuum über 2 h). Das Copolymer wird nachfolgend als Poly(butylacrylat co-butylundecenoat) bezeichnet.

### Copolymer 3

Copolymer 3 wird sinngemäß zu Copolymer 2 hergestellt. In Zulauf 2 wird jedoch Ethyl-4-pentenoat eingesetzt. Das dabei erhaltene Copolymer hat einen Feststoffgehalt von 58,4 % (bestimmt im Vakuum bei 120 °C über 2 h). Das Copolymer wird nachfolgend als Poly(butylacrylat-co-ethyl-4-pentenoat) bezeichnet. M_{w} = 64 000.

### Copolymer 4

Copolymer 4 wird sinngemäß zu den Copolymeren 1 bis 3 hergestellt. In Zulauf 1 wird 595,0 g Ethylacrylat und in Zulauf 2 138,67 g Ethyl-4-Pentenoat eingesetzt. Das dabei erhaltene Copolymer hat einen Feststoffgehalt von 63,7 % (bestimmt im Vakuum bei 120 °C über 2 h). Das Copolymer wird nachfolgend als Poly(ethylacrylat-co-ethyl-4-pentenoat) bezeichnet.

### Copolymer 5

Copolymer 5 wird sinngemäß zu Copolymer 4 hergestellt, jedoch wird in Zulauf 2 260,2 g Ethyl-4-pentenoat eingesetzt. Das dabei erhaltene Copolymer hat einen M_{w}-Wert von 67 000. Das Copolymer wird nachfolgend als Poly(ethylacrylat-co-ethyl-4-pentenoat) bezeichnet.

### HPLC Analytik zur Quantifizierung von n-Butanol und Ethanol:

Es wird eine "Aminex Fermentation Monitoring" Säule (150 * 7,8 mm; Biorad) mit einer "Cation H" Vorsäule eingesetzt. Bei 30 °C und einer Flussrate von 1,0 mL/min wird 5,0 µL Probe injiziert und mit 5 mM Schwefelsäure-Lösung eluiert. Ethanol eluiert nach 6,5 min und n-Butanol nach 11,0 min. Zur Detektion wird ein RI-Detektor verwendet. Zur Quantifizierung werden Kalibrationskurven mit Eichlösungen hergestllt.

### Beispiel 1: Enzymscreening zur Umesterung von Poly(ethylacrylat-co-butylundecenoat)

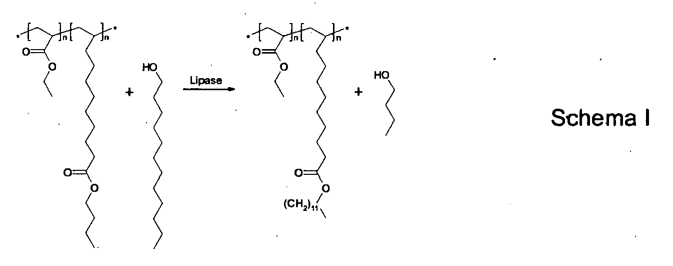

Es werden 5,0 g einer toluolischen Lösung von Poly(ethylacrylat-co-butylundecenoat) (enthalten 3,92 mmol Undecanoat) (berechnet über Feststoffgehalt und Gewichtsprozent der eingesetzten Monomere) und 7,84 mmol Laurylalkohol mit 100 mg Enzympräparat für 24 h geschüttelt bei 60 °C. Mittels HPLC werden die freigesetzten Mengen an Butanol bestimmt und der Umsatz berechnet.

| Enzym | Butanol [mmol/L] | Umsatz [%] |
|---|---|---|
| Ohne | 0,0 | 0 |
| Novozym 435 | 312 | 57 |
| Lipase aus Rhizopus miehei (Lipozym RM IM) | 292 | 54 |
| Lipase aus Pseudomonas fluorescens | 23 | 4 |
| Lipase aus Thermomyces lanuginosa (Lipozym TL IM) | 232 | 43 |
| Lipase aus Candida antarctica A (Chirazym L-5) | 264 | 49 |
| Lipase aus Achromobacter spp. (Lipase ALC) | 48 | 9 |
| Lipase aus Alcaligenes spp. (Lipase QLC) | 120 | 22 |

### Beispiel 2: Enzymscreening zur Umesterung von Poly(butylacrylat-co-ethylpentenoat)

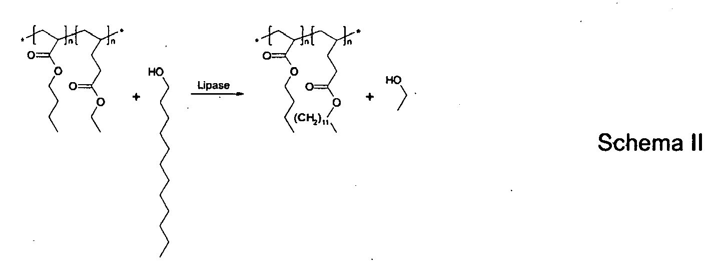

Es werden 5,0 g einer toluolischen Lösung von Poly(butylacrylat-co-ethylpentenoat) (enthalten 6,835 mmol Pentenoat) und 13,67 mmol Laurylalkohol mit 100 mg Enzympräparat für 24 h geschüttelt bei 60 °C. Mittels HPLC wird die freigesetzten Mengen an Ethanol bestimmt und der Umsatz berechnet.

| Enzym | Ethanol [mmol/L] | Umsatz [%] |
|---|---|---|
| Ohne | 0,0 | 0 |
| Lipozym RM IM | 371 | 47 |
| Lipase aus Pseudomonas fluorescens | 28 | 4 |
| Lipozym TL IM | 98 | 12 |
| Candida antarctica A (C.F Chirazym L-5) | 357 | 45 |
| Lipase aus Achromobacter spp. (Lipase ALC) | 53 | 7 |
| Lipase aus Alcaligenes spp. (Lipase QLC) | 127 | 16 |

### Beispiel 3: Variation Substratverhältnis bei Poly(butylacrylat-co-butylundecenoat)

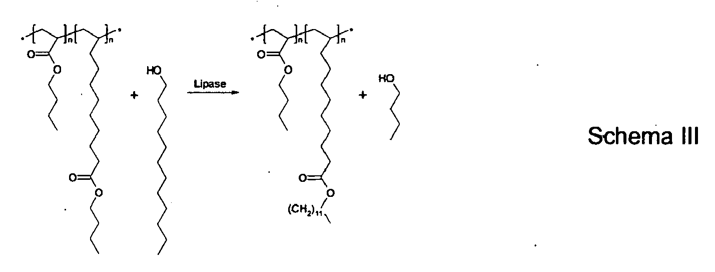

Es werden 5,0 g einer toluolischen Lösung von Poly(butylacrylat-co-butylundecenoat) (enthalten 3,94 mmol Undecenoat) und 3,94 / 7,88 / 11,81 mmol Laurylalkohol mit 100 mg Novozym 435 für 24 h geschüttelt bei 60 °C. Mittels HPLC werden die freigesetzten Mengen an Butanol bestimmt und der Umsatz berechnet.

| Laurylalkohol [mmol] | Laurylalkohol molarer Überschuss | Butanol [mmol/L] | Umsatz [%] |
|---|---|---|---|
| 3,94 | 1 | 357 | 66 |
| 7,88 | 2 | 333 | 54 |
| 11,81 | 3 | 345 | 71 |

### Beispiel 4: Mercaptoethanol mit Poly(ethylacrylat-co-butyl-10-undecenoat)

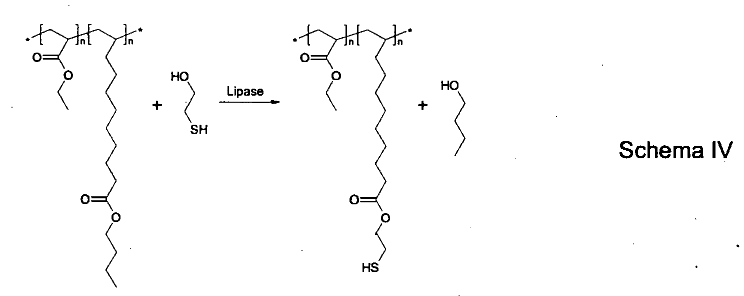

Es werden 5,0 g einer toluolischen Lösung von Poly(ethylacrylat-co-butyl-10-undecenoat) (enthalten 3,94 mmol Undecenoat) und 1,96 / 3,92 / 5,88 mmol Mercaptoethanol mit 100 mg Novozym 435 für 24 h geschüttelt bei 60 °C unter Stickstoffathmophäre. Mittels HPLC werden die freigesetzten Mengen an Butanol und Ethanol bestimmt. Es wird sehr wenig Ethanol gefunden. Aus der Menge Butanol wird der Umsatz berechnet.

| Mercaptoethanol [mmol] | Mercaptoethanol Überschuss | Ethanol [mmol/L] | Butanol [mmol/L] | Umsatz Butanol [%] |
|---|---|---|---|---|
| 1,959 | 1 | 31 | 190 | 30 |
| 3,919 | 2 | 33 | 199 | 33 |
| 5,878 | 3 | 44 | 180 | 32 |

### Beispiel 5: Dimethylaminoethanol mit Poly(ethylacrylat-co-butyl-10-undecenoat)

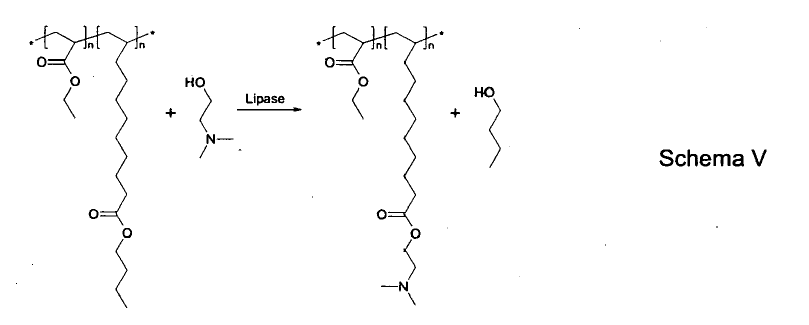

Es werden 5,0 g einer toluolischen Lösung von Poly(ethylacrylat-co-butyl-10-undecenoat) (enthalten 3,92 mmol Undecenoat) und 3,92 / 7,84 / 11,76 mmol Dimethylaminoethanol (DMAE) mit 100 mg Novozym 435 für 24 h geschüttelt bei 60 °C. Mittels HPLC werden die freigesetzten Mengen an Butanol und Ethanol bestimmt. Es wird sehr wenig Ethanol gefunden. Aus der Menge Butanol wird der Umsatz berechnet.

| DMAE [mmol] | DMAE Überschuss | Ethanol [mmol/L] | Butanol [mmol/L] | Umsatz Butanol [%] |
|---|---|---|---|---|
| 3,919 | 1 | 42 | 213 | 34 |
| 7,837 | 2 | 55 | 288 | 49 |
| 11,756 | 3 | 34 | 254 | 46 |

### Beispiel 6: Kontrollreaktionen mit Poly(butylacrylat-co-ethylpentenoat)

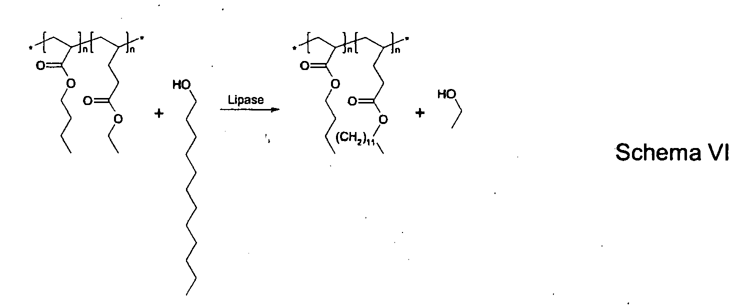

Es werden 5,0 g einer toluolischen Lösung von Poly(butylacrylat-co-ethylpentenoat) (enthalten 6,76 mmol Pentenoat) und 20,27 mmol Laurylalkohol mit 100 / 200 mg Novozym 435 für 24 h geschüttelt bei 60 °C. Mittels HPLC werden die freigesetzten Mengen an Butanol und Ethanol bestimmt. Aus der Menge Butanol wird der Umsatz berechnet.

| Bedingungen / Änderungen | Butanol [mmol/L] | Ethanol [mmol/L] | Umsatz Ethanol [%] |
|---|---|---|---|
| Ohne Enzym | 6,5 | 5 | 1 |
| ohne Laurylalkohol | 0 | 45 | 4 |
| ohne Polymer | 0 | 0 | 0 |
| Beispiel 6 ohne Änderungen | 66 | 398 | 61 |

Die nachfolgenden Vergleichsbeispiele A) und B) sind gemäß US 2004-0082023 durchgeführt.

### Verqleichsbeispiel A)

In einem 100 ml Rundkolben werden Polyacrylsäure (7,2 g bzw. 100 mmol Säuregruppen) und Ethylenglykol (18,6 g bzw. 300 mmol) für 20 min bei 85 °C gerührt. Nach Zugabe von 2,58 g Novozym wird für weitere 24 h bei 85 °C gerührt. In Intervallen wird Vakuum angelegt um das entstandene Wasser zu entfernen. Nach Abkühlen wird der Ansatz in Methanol gelöst und das geträgerte Enzym abfiltriert. Das Produkt wird in Ethylacetat niedergeschlagen und der Umsatz mittels ¹H-NMR in D₂O bzw. DMSO (Dimethylsulfoxid) analog US 2004-0082023 analysiert.

| Bedingungen | Umsatz [%] |
|---|---|
| Novozym 435 | 13 |
| ohne Enzym | 22 |

### Vergleichsbeispiel B)

In einem 100 ml Rundkolben wird ein Gewichtsteil Polyacrylsäure und drei bis 10 Gewichtsteile Ethylenglykol für 20 min bei 85 °C gerührt. Nach Zugabe von 0,1 Gewichtsteil Novozym 435 wird für weitere 24 h bei 85 °C gerührt. In Intervallen wird Vakuum angelegt um das entstandene Wasser zu entfernen. Nach Abkühlen wird der Ansatz in Methanol gelöst, das geträgerte Enzym abfiltriert und das Methanol am Rotationsverdampfer entfernt. Der Umsatz wird mittels ¹H-NMR analog US 2004-0082023 bestimmt.

| Novozym 435 | Equivalente Ethylenglykol | Zeit [h] | Umsatz [%] |
|---|---|---|---|
| - | 3 | 24 | 16 |
| - | 3 | 24 | 17 |
| 10 wt% | 3 | 24 | 9 |
| 10 wt% | 3 | 31 | 10 |
| 20 wt% | 3 | 24 | 10 |
| 10 wt% | 5 | 24 | 9 |
| 10 wt% | 10 | 24 | 6 |

Die vorstehenden Beispiele zeigen deutlich, welchen Effekt die Verwendung eines Enzyms bei der Um- oder Veresterung von Seitenketten in Polymeren mit Alkoholen hat. Die Vergleichsbeispiele zeigen auf, das die Verwendung eines Enzyms bei der Um- oder Veresterung von den direkt an das Polymerrückgrat gebundenen Säuregruppen der Polyacrylsäure zu keinerlei Verbesserungen führt (der Umsatz ist sogar geringer). Werden hingegen Säuregruppen von Polymeren um- oder verestert, die gemäß dem erfindungsgemäßen Verfahren nicht direkt an das Polymerrückgrat gebunden sind, so bewirkt die Verwendung eines Enzyms eine deutliche Umsatzerhöhung. Insbesondere aus den Beispielen 2 sowie 6 wird ersichtlich, dass auch in Abwesenheit eines Enzyms zu einem sehr geringen Grad eine Umesterung stattfindet. Sobald jedoch ein Enzym verwendet wird, werden die nicht direkt an das Polymerrückgrat gebundenen Säuregruppen selektiv (bei einem deutlich erhöhten Umsatz) umgeestert.

Zu den Schemata I bis VI ist anzumerken, dass es sich hierbei um eine idealisierte Darstellung des Umesterungsvorganges des jeweiligen Polymeres handelt. Das auf der rechten Seite des jeweiligen Schemas abgebildete Copolymer (Umesterungsprodukt) ist für einen idealisierten, 100%-igen Umsatz dargestellt. Wie den Vergleichsbeispielen jedoch zu entnehmen ist, findet der Umsatz in der Regel nicht zu 100 % statt, sodass das jeweilige Polymer auch solche Bausteine aufweist, wie sie auf der linken Seite des jeweiligen Schemas für das entsprechende Ausgangscopolymer vor der Umesterung dargestellt sind.

## Patentansprüche

1. Verfahren zur Um- oder Veresterung von Seitenketten in Polymeren umfassend die folgenden Schritte
a) Herstellung eines Copolymeren erhältlich durch Polymerisation von
aa) mindestens einem (Meth)acrylat der allgemeinen Formel (I), als Komponente A, 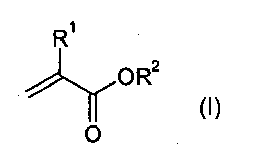 worin
R¹ H oder CH₃ bedeutet, und
R² H oder ein Alkylrest ist, der gegebenenfalls mit funktionellen Gruppen wie Acryl-, Ether-, Amino-, Epoxy-, Halogen- oder Sulfonsäuregruppen substituiert ist, und
ab) mindestens einem Monomeren der allgemeinen Formel (II), als Komponente B, 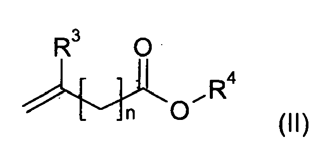 worin
R³ die gleiche Bedeutung wie R¹ hat,
R⁴ die gleiche Bedeutung wie R² hat, und n = 1 bis 40 ist,
und
b) Um- oder Veresterung der den Rest R⁴ aufweisenden Carboxylgruppe mit einem Alkohol in Anwesenheit eines die Um- oder Veresterung katalysierenden Enzyms.

2. Verfahren nach Anspruch 1, **dadurch gekennzeichnet, dass** der in Schritt b) eingesetzte Alkohol ausgewählt ist aus Zucker, Thioalkohol, Aminoalkohol, ungesättigten Alkoholen, gesättigten aliphatischen Alkoholen oder Polyolen, insbesondere aus Mercaptoethanol, Dimethylaminoalkohol oder Laurylalkohol.

3. Verfahren nach Anspruch 1 oder 2, **dadurch gekennzeichnet, dass** als Enzym eine Lipase aus der Fraktion B von Candida antarctica, aus Alcaligenes species, aus Aspergillus species, aus Mucor species, aus Penicilinum species, aus Geotricum species, aus Rhizopus species, aus Burkholderia species, aus Burkholderia plantarii, aus Candida species, aus Pseudomonas species, aus Thermomyces species oder aus der Schweinepankreas verwendet wird.

4. Verfahren gemäß einem der Ansprüche 1 bis 3, **dadurch gekennzeichnet, dass** mehr als 40 % des Restes R⁴ in Schritt b) mit dem Alkohol um- oder verestert werden.

5. Verfahren nach einem der Ansprüche 1 bis 4, **dadurch gekennzeichnet, dass** in Schritt a) als Komponente C mindestens ein weiteres Monomer, das mit den Monomeren der allgemeinen Formeln (I) und (II) copolymerisierbar ist, vorzugsweise ausgewählt aus Styrol, Acrylnitril, Vinylacetat, Vinylpropionat, Vinylchlorid oder Vinylidenchlorid verwendet wird.

6. Verfahren nach einem der Ansprüche 1 bis 5, **dadurch gekennzeichnet, dass** als Komponente A ein C₁-C₆-Alkylacrylat, C₁-C₆-Alkylmethacrylat, Methacrylsäure oder Acrylsäure verwendet wird,
in der Komponente B R³=H oder CH₃, n=2 bis 8 und R⁴=C₁-C₄-Alkyl sind,
als Alkohol in Schritt b) Mercaptoethanol oder Dimethylaminoalkohol verwendet wird und/oder
als Enzym eine Lipase aus der Fraktion B von Candida antarctica oder aus Burkholderia plantarii verwendet wird.

7. Verfahren gemäß Anspruch 6, **dadurch gekennzeichnet, dass** in Schritt b) als Alkohol Laurylalkohol anstelle von Mercaptoethanol oder Dimethylaminoalkohol verwendet wird.

8. Verfahren gemäß einem der Ansprüche 1 bis 7, **dadurch gekennzeichnet, dass**
in Schritt a)
10 bis 90 Gew.-% der Komponente A
10 bis 90 Gew.-% der Komponente B
0 bis 50 Gew.-% der Komponente C
eingesetzt werden, wobei die Gesamtsumme der Komponenten A bis C 100 Gew.-% ergibt.

9. Verfahren nach einem der Ansprüche 1 bis 8, **dadurch gekennzeichnet, dass** Schritt b) bei einer Temperatur von 20 bis 100°C, bevorzugt 40 bis 80°C durchgeführt wird.

10. Verfahren nach einem der Ansprüche 1 bis 9, **dadurch gekennzeichnet, dass** Schritt b) in einem Lösungsmittel, vorzugsweise in Toluol durchgeführt wird.

11. Verfahren nach einem der Ansprüche 1 bis 10, **dadurch gekennzeichnet, dass** in Schritt b) das molare Verhältnis von Alkohol zur den Rest R⁴ aufweisenden Carboxylgruppe 2 bis 4 zu 1 beträgt.

12. Polymer herstellbar nach einem Verfahren gemäß einem der Ansprüche 1 bis 11.

13. Verwendung eines Polymers gemäß Anspruch 12 als Faserschutzmittel in Waschmitteln als Inkrustinationsinhibitor, zur Komplexierung von Metallen, als Vergrauungsinhibitor, in Korrosionsschutzmitteln zur Passivierung von Stahloberflächen, in Dispersionsfarben, in Bauchemikalien, in Klebstoffen, zur Papierherstellung, als Dispergiermittel, in Dispersionen, in Lacken und Beschichtungen oder als Komplexbildner.

## Claims

1. A process for esterifying or transesterifying side chains in polymers, comprising the following steps
a) preparing a copolymer obtainable by polymerization of
aa) at least one (meth)acrylate of the general formula (I) as component A, 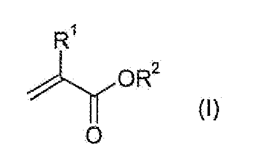 in which
R¹ is H or CH₃, and
R² is H or an alkyl radical which is optionally substituted by functional groups such as acryloyl, ether, amino,
epoxy, halogen or sulfonic acid groups, and
ab) at least one monomer of the general formula (II) as component B, 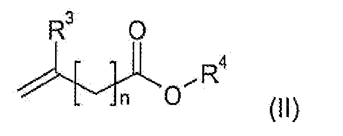 in which
R³ is as defined for R¹,
R⁴ is as defined for R², and n = from 1 to 40,
and
b) esterifying or transesterifying the carboxyl group having the R⁴ radical with an alcohol in the presence of an enzyme which catalyzes the esterification or transesterification.

2. The process according to claim 1, wherein the alcohol used in step b) is selected from sugar, thio alcohol, amino alcohol, unsaturated alcohols, saturated aliphatic alcohols or polyols, especially from mercaptoethanol, dimethylamino alcohol or lauryl alcohol.

3. The process according to claim 1 or 2, wherein the enzyme used is a lipase from fraction B of Candida antarctica, from Alcaligenes species, from Aspergillus species, from Mucor species, from Penicilinum species, from Geotricum species, from Rhizopus species, from Burkholderia species, from Burkholderia plantarii, from Candida species, from Pseudomonas species, from Thermomyces species or from the porcine pancreas.

4. The process according to any of claims 1 to 3, wherein more than 40% of the R⁴ radical is esterified or transesterified with the alcohol in step b).

5. The process according to any of claims 1 to 4, wherein the component C used in step a) is at least one further monomer which is copolymerizable with the monomers of the general formulae (I) and (II), preferably selected from styrene, acrylonitrile, vinyl acetate, vinyl propionate, vinyl chloride or vinylidene chloride.

6. The process according to any of claims 1 to 5, wherein the component A used is a C₁-C₆-alkyl acrylate, C₁-C₆-alkyl methacrylate, methacrylic acid or acrylic acid,
in component B, R³= H or CH₃, n =from 2 to 8 and R⁴ = C₁-C₄-alkyl,
the alcohol used in step b) is mercaptoethanol or dimethylamino alcohol and/or
the enzyme used is a lipase from fraction B of Candida antarctica or from Burkholderia plantarii.

7. The process according to claim 6, wherein the alcohol used in step b) is lauryl alcohol in place of mercaptoethanol or dimethylamino alcohol.

8. The process according to any of claims 1 to 7, wherein, in step a),
from 10 to 90% by weight of component A
from 10 to 90% by weight of component B
from 0 to 50% by weight of component C
are used, where the sum total of components A to C is 100% by weight.

9. The process according to any of claims 1 to 8, wherein step b) is carried out at a temperature of from 20 to 100°C. preferably from 40 to 80°C.

10. The process according to any of claims 1 to 9, wherein step b) is carried out in a solvent, preferably in toluene.

11. The process according two any of claims 1 to 10, wherein the molar ratio of alcohol to the carboxyl group having the R⁴ radical in step b) is from 2 to 4:1.

12. A polymer preparable by a process according to any of claims 1 to 11.

13. The use of a polymer according to claim 12 as a fiber protectant in laundry detergents, as an incrustation inhibitor, for the complexation of metals, as a graying inhibitor, in corrosion protestants for passivating steel surfaces, in disperse dyes, in building chemicals, in adhesives, for paper production, as a dispersant, in dispersions, in lacquers and coatings or as a complexing agent.

## Revendications

1. Procédé d'estérification ou de transestérification de chaînes latérales dans des polymères, comprenant les étapes suivantes
a) fabrication d'un copolymère pouvant être obtenu par polymérisation de
aa) au moins un (méth)acrylate de formule générale (I), en tant que composant A, 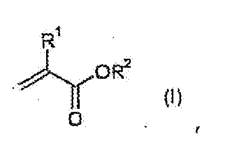 dans laquelle
R¹ signifie H ou CH₃, et
R² est H ou un radical alkyle, qui est éventuellement substitué avec des groupes fonctionnels tels que des groupes acrylique, éther, amino, époxy, halogène ou acide sulfonique, et
ab) au moins un monomère de formule générale (II), en tant que composant B, 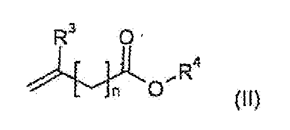 dans laquelle
R³ a la même signification que R¹,
R⁴ a la même signification que R², et = 1 à 40,
et
b) estérification ou transestérification du groupe carbonyle comportant le radical R⁴ avec un alcool en présence d'une Enzyme catalysant l'estérification ou la transestérification.

2. Procédé salon la revendication 1, **caractérisé en ce que** l'alcool utilisé à l'étape b) est choisi parmi un sucre, un thioalcool, un aminoalcool, des alcools insaturés, des alcools aliphatiques saturés ou des polyols, notamment parmi le mercaptoéthanol, le diméthylaminoalcool ou l'alcool laurylique.

3. Procédé selon la revendication 1 ou 2, **caractérisé en ce qu'**une lipase issue de la fraction B de Candida antarctica, de l'espèce Alcaligenes, de l'espèce Aspergillus, de l'espèce Mucor, de l'espèce Penicilinum, de l'espèce Geotricum, de l'espère Rhizopus, de l'espère Burkholderia, de l'espèce Burkholderia plantarii, de l'espèce Candida, de l'espèce Pseudomonas, de l'espèce Thermomyces ou du pancréas de porc est utilisée en tant qu'enzyme.

4. Procédé salon l'une quelconque des revendications 1 à 3, **caractérisé en ce que** plus de 40 % du radical R⁴ est estérifié ou transestérifié avec l'alcool à l'étape b).

5. Procédé selon l'une quelconque des revendications 1 à 4, **caractérisé en ce qu'**au moins un monomère supplémentaire, qui est copolymérisable avec les monomètres de formules générales (I) et (II), de référence choisi parmi le styrène, l'acrylonitrile, l'acétate de vinyle, le propionate de vinyle, le chlorure de vinyle ou le chlorure de vinylidène, est utilisé en tant que compostant C à l'étape a).

6. Procédé selon l'une quelconque des revendications 1 à 5, **caractérisé en ce qu'**un acrylate d'alkyle en C₁-C₆, un méthacrylate d'alkyle en C₁-C₆, l'acide méthacrylique ou l'acide acrylique est utilisé en tant que composant A,
dans le composant B, R³ = H ou CH₃, n = 2 à 8 et R⁴ = alkyle en C₁-C₄,
du mercaptoéthanol ou du diméthylaminoalcool est utilisé en tant qu'alcool à l'étape b) et/ou
une lipase issue de la fraction B de Candida antarctica ou de Burkholderia plantarii est utilisée en tant qu'enzyme.

7. Procédé selon la revendication 6, **caractérisé en ce que** l'alcool laurylique est utilisé à la place du mercaptoéthanol ou du diméthylaminoalcool en tant qu'alcool à l'étape b).

8. Procédé selon l'une quelconque des revendications 1 à 7, **caractérisé en ce qu'**à l'étape a)
10 à 90 % en poids du composant A
10 à 90 % en poids du composant B
0 à 50 % en poids du composant C
sont utilisés, la somme totale des composants A à C étant de 100 % en poids.

9. Procédé selon l'une quelconque des revendications 1 à 8, **caractérisé en ce que** l'étape b) est réalisée à une température de 20 à 100 °C, de préférence de 40 à 80 °C.

10. Procédé selon l'une quelconque des revendications 1 à 9, **caractérisé en ce que** l'étape b) est réalisée dans un solvant, de préférence dans du toluène.

11. Procédé selon l'une quelconque des revendications 1 à 10, **caractérisé en ce qu'**à l'étape b), le rapport molaire entre l'alcool et le groupe carboxyle comportant le radical R⁴ est de 2 à 4 sur 1.

12. Polymère pouvant être fabriqué par un procédé selon l'une quelconque des revendications 1 à 11.

13. Utilisation d'un polymère selon la revendication 12 en tant qu'agent de protection des fibres dans des agents de lavage, en tant qu'inhibiteur d'incrustation, pour la complexation de métaux, en tant qu'inhibiteur du grisonnement, dans des agents anticorrosion pour la passivation de surfaces en acier, dans des peintures émulsions, dans des produits chimiques pour le bâtiment, dans des adhésifs, pour la fabrication de papier, en tant qu'agent de dispersion, dans des dispersions, dans des laques et des revêtements ou en tant qu'agent complexant.
